# EUROPÄISCHE PATENTSCHRIFT

(11) **EP 2 706 183 B1**
(45) Veröffentlichungstag und Bekanntmachung des Hinweises auf die Patenterteilung: **13.01.2016**
(21) Anmeldenummer: 13401100.6
(22) Anmeldetag: 05.09.2013
(51) Int. Cl.: E06B 3/263, E06B 3/30, E06B 3/54, E06B 3/56

(54) **Fenster oder Tür mit einem Dämmelement**
Window or door with an insulating element
Fenêtre ou porte dotée d'un élément isolant

(30) Priorität: 07.09.2012 DE 102012108330
(43) Veröffentlichungstag der Anmeldung: 12.03.2014
(73) Patentinhaber: Pazen Fenster + Technik GmbH, 54516 Wittlich (DE)
(72) Erfinder: Pazen, Günter, 54492 Zeltingen-Rachtig (DE)
(74) Vertreter: Kutsch, Bernd

(56) Entgegenhaltungen:
- EP-A1- 2 189 608
- EP-A1- 2 660 416
- AT-U1- 10 584

## Beschreibung

Die Erfindung betrifft ein Fenster oder eine Tür mit einem Dämmelement insbesondere im Bereich eines Übergangs von einem Fenster- oder Türprofil zu einer Verglasung oder einem Türblatt.

### Stand der Technik

Fenster und Türen aus Holz, Kunststoff, Metall wie Aluminium oder aus einer Kombination dieser Materialien sind bekannt. Insbesondere sind auch Fenster und Türen für Niedrigenergiehäuser oder sogenannte Passivhäuser, d.h. Häuser mit einem Heizwärmebedarf von maximal 15 kWh/(m²a), bekannt, die sich durch besonders geringe Wärmedurchgangswerte auszeichnen. In dieser Hinsicht sei beispielsweise auf die Produkte der Anmelderin verwiesen, die u. a. auf der Internet-Seite www.enersign.com beschrieben werden. Die Wärmedurchgangswerte solcher Fenster bzw. Türen, insbesondere solcher, die für ein Gebäude vorgesehen sind, das die Anforderungen an ein KfW-Effizienzhaus 40 (EnEV 2009) oder besser erfüllen soll, werden zunehmend durch die Profile der Fenster bzw. Türen bestimmt und nicht mehr wie im bisherigen Ausmaß von den Verglasungen oder Türfüllungen.

DE 195 46 678 C2 zeigt ein Fenster mit einem Blendrahmenprofil, einem Flügelrahmenprofil und einer mit dem Flügelrahmenprofil verbundenen Verglasung. Das Blendrahmenprofil und das Flügelrahmenprofil sind dabei aus einem Kern aus Hartschaumstoff und einer umgebenden massiven Holzlamelle ausgebildet.

Von der Firma Wiegand Fensterbau, Hatzfeld-Holzhausen, werden unter der Bezeichnung DW-plus integral FI oder WIEGABD-DW-Plus Fenster für Niedrigenergiehäuser vertrieben (siehe www.wiegand-info.de und die dort bereitgestellten Datenblätter zu diesen Fenstern) bei denen auf der Außenseite des Fensters im Bereich des Übergangs von dem Blendrahmenprofi zur Verglasung relativ komplex aufgebaute und teure Dämmelemente vorgesehen sind. Diese können aus Aluminium, Fiberglas oder Kunststoff bestehen.

Weiter werden von der Anmelderin unter der Bezeichnung ENERsign^{®} Fenster für Niedrigenergiehäuser vertrieben, bei auf der Außenseite des Fensters im Bereich des Übergangs vom Blendrahmenprofil zur Verglasung ein Dämmelement aus einem Dämmmaterial vorgesehen ist, das im Randbereich des Dämmelements mit einem Abdeckprofil aus Fiberglas versehen ist, und das mit dem Blendrahmenprofi verschraubt ist, wobei das Dämmelement den Übergang von der Verglasung zu dem Blendrahmenprofi abdeckt (siehe dazu www.enersign.de/Enersign_D.pdf).

Insgesamt sind die bisher verwendeten Dämmelemente für den Übergang von einer Verglasung zu einem Blendrahmenprofil im Fall eines Fensters bzw. für den Übergang von eine Türzarge zu einer Verglasung, einem Türblatt oder einem Türflügelprofil, insbesondere bei hochgedämmten Fenstern oder Türen für Niedrigenergie- oder Passivhäusern, relativ komplex im Aufbau, durch das verwendete Material und die Profilgestaltung sehr kostenintensiv, und zudem auch noch wenig flexibel verwendbar, was u. a. zu hohen Kosten für die Vorhaltung dieser Elemente führt und die Herstellung von Fenstern bzw. Türen in logistischer Hinsicht verkompliziert.

EP 2 189 608 A1 beschreibt ein Fenster gemäß dem Oberbegriff von Anspruch 1. Ein Fenster mit einer Verglasung, wobei das Fensterprofilelement mit einem Dämmelement aus einem plattenförmigen Dämmmaterial verbunden ist, wobei das Dämmmaterial eine Deckschicht aufweist und wobei das Dämmelement bereichsweise mit einem Abdeckprofil versehen ist, ist auch in AT 10 584 U1 sowie in EP 2 660 416 A1, die erst nach dem Prioritätstag dieser Anmeldung veröffentlicht wurde, beschrieben.

Aufgabe der vorliegenden Erfindung war die Bereitstellung eines Dämmelementes für ein Fenster oder eine Tür insbesondere eines Niedrigenergie- oder Passivhauses, das unter anderem zur Dämmung des Übergangs von einer Verglasung zu einem Blendrahmenprofil im Fall eines Fensters bzw. des Übergangs von einer Türzarge zu einer Verglasung, einem Türblatt oder einem Türflügelprofil geeignet ist, und das gegenüber bekannten Dämmelementen kostengünstiger herstellbar und hinsichtlich seiner Grundkonstruktion flexibler einsetzbar ist.

### Zusammenfassung und Vorteile der Erfindung

Die Erfindung betrifft ein Fenster gemäß Anspruch 1 und eine Tür gemäß Anspruch 13.

Vorteilhafte Weiterbildungen der Erfindung sind Gegenstand der Unteransprüche.

Die Erfindung kann vorteilhaft gleichermaßen bei einem Fenster wie bei einer Tür realisiert sein, wobei dem Blendrahmen des Fensters die Türzarge oder das Türzargenprofil der Tür entspricht, und wobei dem Flügelrahmen des Fensters das Türblatt oder das Türflügelprofil der Tür entspricht. Die Tür kann dabei eine Verglasung aufweisen oder nicht.

Insofern gilt das nachfolgend für ein Fenster beschriebene in analoger Weise auch für eine Tür.

Das erfindungsgemäß eingesetzte Dämmelement zeichnet sich durch eine an sich einfache Grundkonstruktion aus, die weitgehend universell einsetzbar ist, und es kann bei Bedarf in einfacher Weise in der jeweils benötigten Größe hergestellt werden. Insbesondere weisen die beidseits des plattenförmigen Dämmmaterials zumindest bereichsweise, insbesondere ganzflächig, vorgesehenen Deckschichten eine einfache Struktur auf und sind kostengünstig herstellbar.

Vorteilhaft ist weiterhin, dass das plattenförmige Dämmmaterial, insbesondere in Form einer Platte aus expandiertem Polystyrol oder einem ähnlichen Material, in einfacher Weise mit den Deckschichten verklebt werden kann, wozu vorzugsweise ein üblicher Klebstoff wie ein 2-Komponentenkleber, insbesondere auf Silikonbasis, eingesetzt wird.

Auch das Abdeckprofil ist vorzugsweise mit dem Dämmmaterial und/oder einer der Deckschichten verklebt, so dass bei der Herstellung des Dämmelementes auf Schrauben ganz verzichtet werden kann.

Auch das Dämmelement ist vorzugsweise mit dem Fensterprofilelement oder dem Türprofilelement verklebt, d. h. auch hier kann wieder auf Schrauben verzichtet werden, was ästhetische Vorteile hat und das Herstellungsverfahren vereinfacht. Dazu ist beispielsweise eine Ausnehmung oder eine Nut in dem jeweiligen Profilelement des Fensters bzw. der Tür vorgesehen, die zumindest teilweise mit einem üblichen Klebstoff wie einem 2-Komponentenkleber, insbesondere auf Silikonbasis, gefüllt ist, so dass das Dämmelement über den Klebstoff an dem Profilelement befestigt ist.

Vorzugsweise ist das Profilelement ein Fensterprofilelement in Form eines Blendrahmenprofils oder eines Stulpprofils.

Die Dicke des plattenförmigen Dämmmaterials liegt aus Gründen einer guten Dämmung und aus ästhetischen und statischen Gründen vorzugsweise in einem Bereich von 15 mm bis 40 mm, insbesondere 22 mm bis 32 mm.

Beide Deckschichten sind aus einer Fiberglasplatte gefertigt, die insbesondere auf der Außenseite des Fensters gefärbt oder lackiert sein kann. Fiberglas ist u. a. aus statischen und thermischen Gründen vorteilhaft. So ist es langlebig und langzeitstabil und passt hinsichtlich seiner thermischen Ausdehnung gut zu den anderen verwendeten Materialien. Die Dicke der Deckschichten liegt im Bereich 0,5 mm bis 2,5 mm, vorzugsweise 1 mm bis 1,5 mm. Diese sind vorzugsweise als ebene Platten ausgebildet.

Das Abdeckprofil, das die Ecke des Dämmelementes insbesondere im Bereich des Übergangs von dem Dämmelementes zu der Verglasung ausbildet und schützt, ist vorzugsweise ein an sich bekanntes Aluminiumprofil, wie es vielfach im Fensterbau eingesetzt wird. Dieses Abdeckprofil kann nur an den seitlichen Ecken des Dämmelementes vorgesehen sein oder die äußere Deckschicht (neben einer oder beiden Ecken) bei Bedarf auch ganz abdecken. Alternativ kann das Abdeckprofil auch ein Kunststoffprofil sein oder aus einem anderen Metall hergestellt sein.

Bevorzugt ist auch das Abdeckprofil mit dem Dämmelement verklebt, d. h. in der Regel mit einer Abdeckschicht und/oder dem plattenförmigen Dämmmaterial, wobei auch hier wieder vorzugsweise ein üblicher Klebstoff wie ein 2-Komponentenkleber, insbesondere auf Silikonbasis, verwendet wird. Somit kann auch in diesem Fall auf Schrauben oder Clips verzichtet werden, was die Herstellung einfach und zuverlässig macht und zu einem guten ästhetischen Eindruck des Dämmelementes beiträgt.

Im Bereich des Übergangs von dem Dämmelementes zu der Verglasung ist vorzugsweise eine relativ harte Dichtung, vorzugsweise eine Dichtung aus Gummi mit einer spitz zulaufenden Lippe vorgesehen, die den Spalt zwischen dem Dämmelement und der Verglasung dort abdichtet. Diese Dichtung hat vorzugsweise eine Härte in einem Bereich von 45 Shore A bis 55 Shore A, beispielsweise 50 Shore A. Der relativ harten Dichtung gegenüber ist vorzugsweise eine relativ weiche Dichtung, insbesondere aus Gummi, vorgesehen. Diese Dichtung hat vorzugsweise eine Härte in einem Bereich von 70 Shore A bis 90 Shore A, beispielsweise 80 Shore A.

Insgesamt zeichnet sich das erfindungsgemäße Fenster bzw. die erfindungsgemäße Tür durch eine vereinfachte und kostengünstige Herstellung und ein Design "aus einem Guss" aus. Daneben ist das Fenster bzw. die Tür besonders formschön, ohne dass Abstriche an der Wärmedämmung gemacht werden müssen.

Vorteilhaft ist weiter, dass in das Dämmelement in einfacher Weise eine Wasserabführung integriert werden kann, und dass das Dämmelement einfach und zuverlässig mit anderen Bauteilen des Gebäudes, beispielsweise einer außen vorgesehenen Verschattungsvorrichtung, verbunden werden kann.

### Zeichnungen

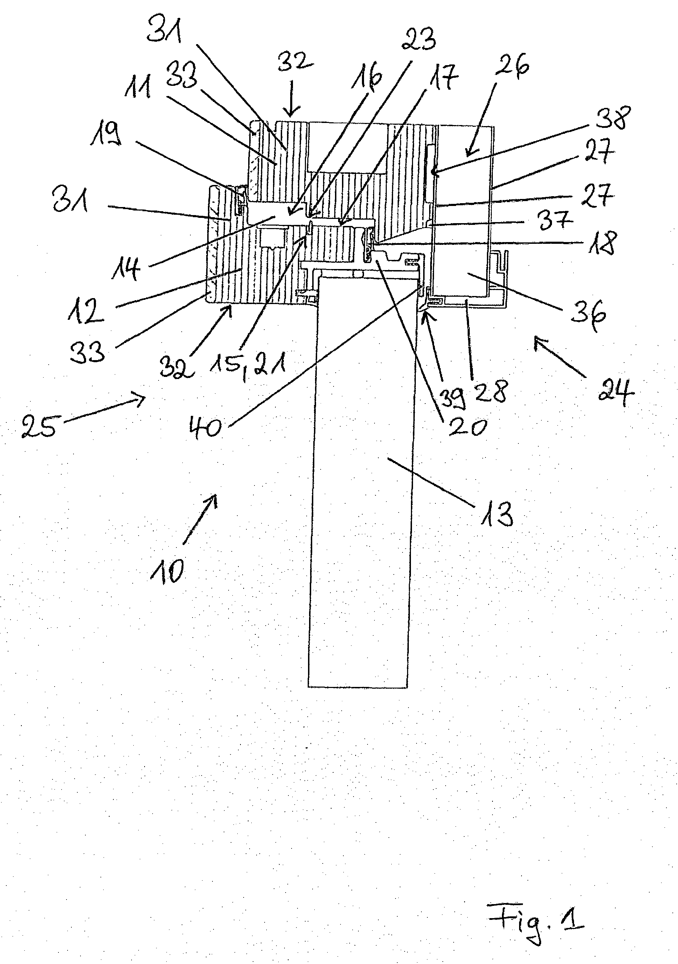

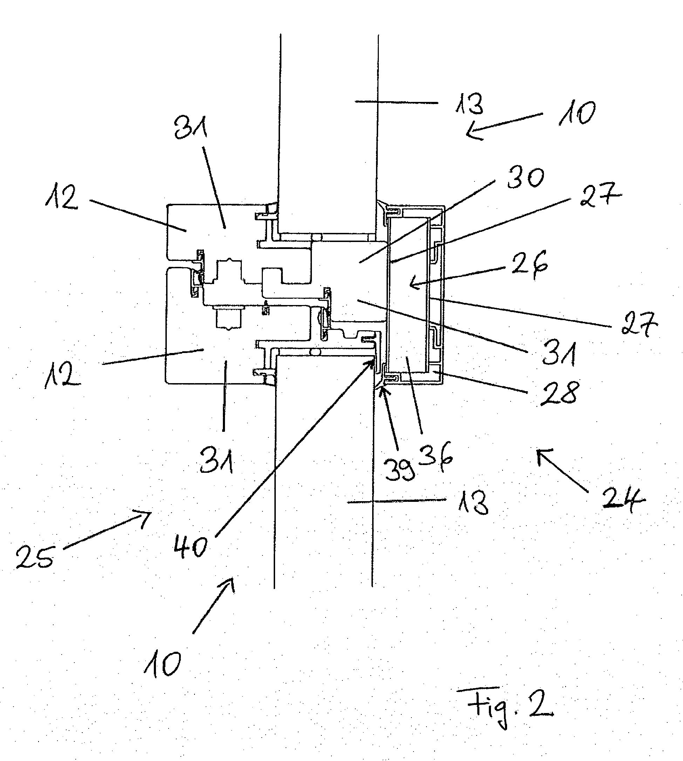

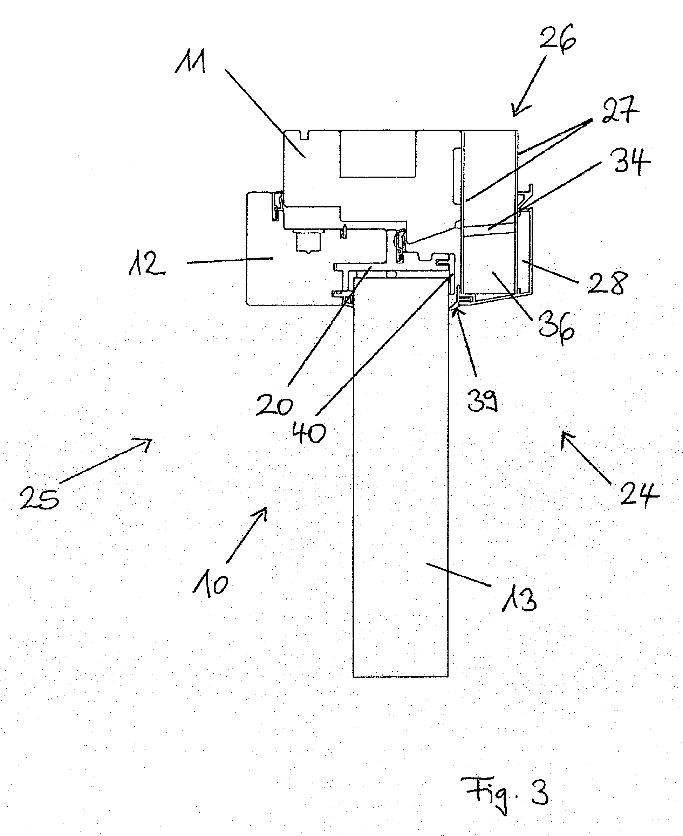

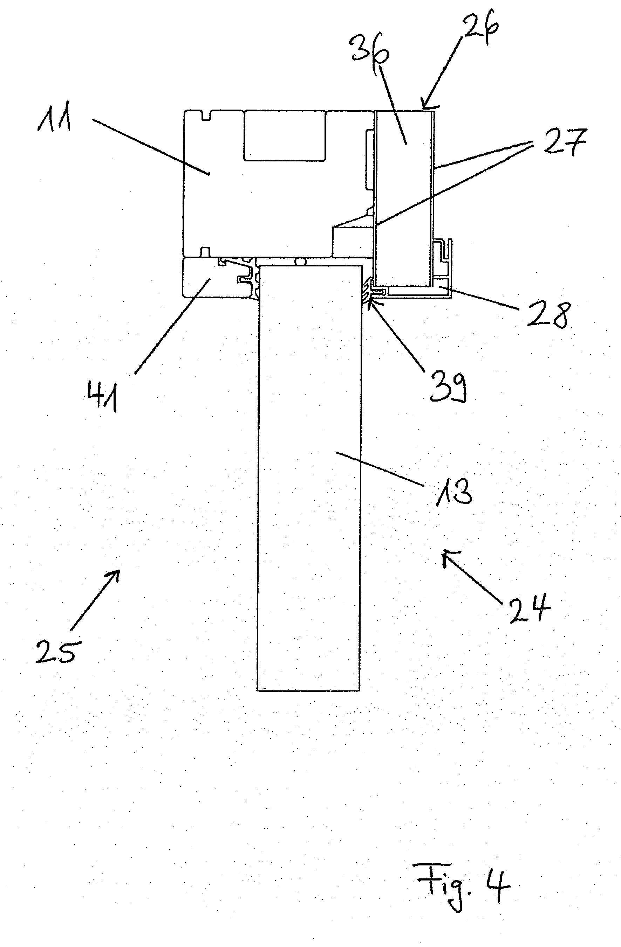

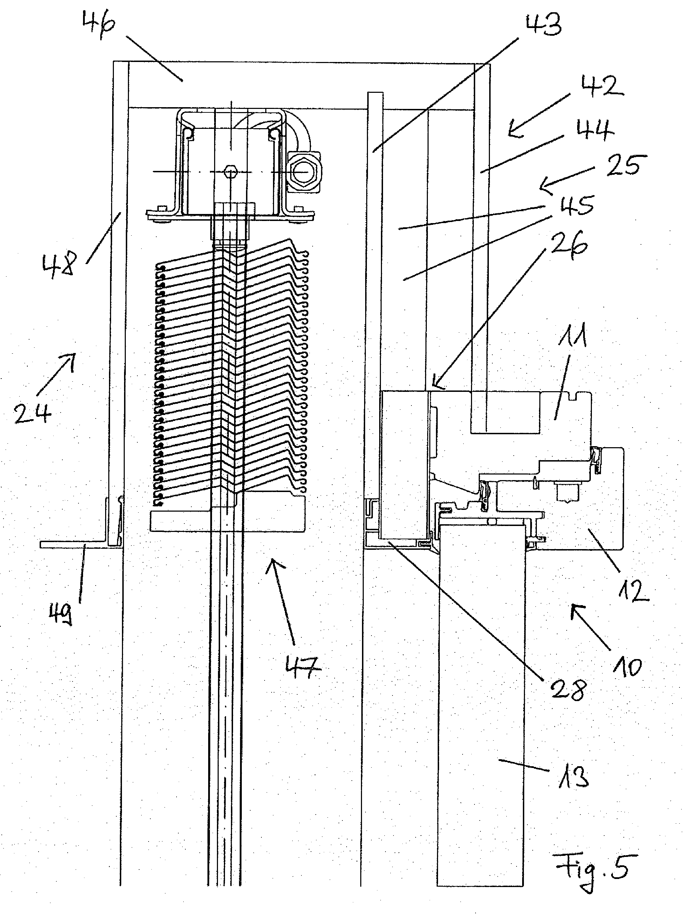

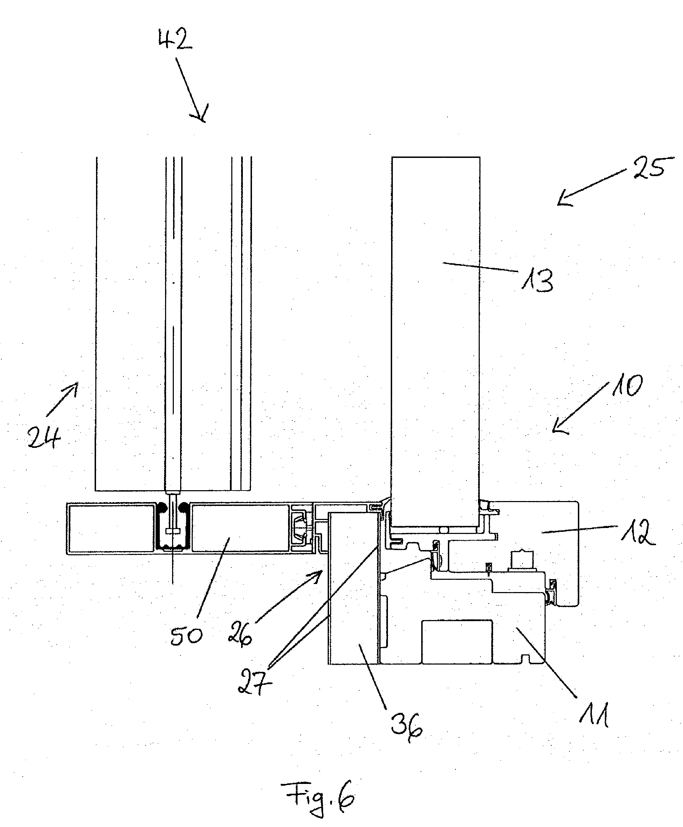

Die Erfindung wird anhand der Zeichnungen und der nachfolgend beschriebenen Ausführungsbeispiele näher erläutert. Es zeigt Figur 1 ein erstes Ausführungsbeispiel der Erfindung in Form eines Schnittes durch einen Teil eines Fensters mit Blend- und Flügelrahmen und einem Dämmelement, Figur 2 ein zweites Ausführungsbeispiel der Erfindung in Form eines Schnittes durch einen Teil zweier benachbarter Fenster bzw. zweier benachbarter Verglasungen mit Flügelrahmen und Stulpprofil sowie einem Dämmelement, Figur 3 ein drittes Ausführungsbeispiel der Erfindung in Form eines Schnittes durch einen Teil eines Fensters mit Blend- und Flügelrahmen und einem Dämmelement mit integrierter Wasserabführung, Figur 4 ein viertes Ausführungsbeispiel der Erfindung in Form eines Schnittes durch einen Teil eines feststehenden Fensters mit einem Dämmelement, Figur 5 ein fünftes Ausführungsbeispiel der Erfindung in Form eines Schnittes durch einen Teil eines Fensters mit Blend- und Flügelrahmen, einem Dämmelement sowie einer Verschattungsvorrichtung, und Figur 6 einen Schnitt durch die Anordnung gemäß Figur 5 senkrecht zu der Ebene des in Figur 5 gezeigten Schnittes.

### Ausführungsbeispiele

Die Figur 1 erläutert ein Ausführungsbeispiel der Erfindung an einem Fenster 10 für ein Niedrigenergie oder Passivhaus, das gemäß EN 10077 und bezogen auf eine Fensterprüfgröße von 1230 x 1480 mm einen Wärmedurchgang Fenster U_{window} von ≤ 0,65 W/m²K, einen Wärmedurchgang Rahmen U_{Frame} seitlich und oben von ≤ 0,65 W/m²K, und einen Wärmedurchgang Rahmen U_{Frame} unten von ≤ 0,8 W/m²K hat.

Die Figur 1 zeigt einen Teilbereich des Fensters 10 im Schnitt mit einem Blendrahmenprofil 11, einem Flügelrahmenprofil 12, einer Verglasung 13 und einer bei geschlossenem Fenster geschlossenen Kammer 14 zwischen dem Blendrahmenprofil 11 und dem Flügelrahmenprofil 12, die mit einer Kammertrennvorrichtung 15 versehen ist, so dass die geschlossene Kammer 14 darüber in eine erste Teilkammer 16 und eine zweite Teilkammer 17 geteilt wird.

Die geschlossene Kammer 14 ist auf der Außenseite 24 des Fensters 10 mittels einer ersten Dichtung 18 zwischen dem Blendrahmenprofil 11 und dem Flügelrahmenprofil 12 oder, wie gezeigt, mittels der ersten Dichtung 18 zwischen dem Blendrahmenprofil 11 und einem mit der Verglasung 13 und dem Flügelrahmenprofil 14 verbundenen weiteren Profil 20, insbesondere einem Fiberglasprofil, zum Halten der Verglasung 13 geschlossen. Auf der Innenseite 25 des Fensters 10 ist die geschlossene Kammer 14 mittels einer zweiten Dichtung 19 zwischen dem Blendrahmenprofil 11 und dem Flügelrahmenprofil 12 geschlossen. Die Dichtungen 18, 19 sind übliche Gummidichtungen für Fenster des erläuterten Typs in der in Figur 1 näher gezeigten Form.

Unter der geschlossenen Kammer 14 wird der bei geschlossenem Fenster 10 in der Regel mit Luft gefüllte Hohlraum zwischen dem Blendrahmenprofil 11 und dem Flügelrahmenprofil 12 verstanden, der im Querschnitt von diesen beiden Profilen 11, 12 und den beiden Dichtungen 18, 19 begrenzt ist, und die sich in Richtung senkrecht zu der gezeigten Querschnittsebene zumindest bereichsweise parallel zu den Profilen 11, 12 erstreckt.

Die Kammer 14 weist eine Stufe 23 zwischen der größeren ersten Teilkammer 16 und der kleineren zweiten Teilkammer 17, die in Form eines etwa 2,5 mm breiten länglichen Spaltes ausgebildet ist, in der Nähe des Ortes der Kammertrennvorrichtung 15 auf. Die Höhe der zweiten Teilkammer liegt typischerweise im Bereich von etwa 8 mm.

Die Kammertrennvorrichtung 15 ist, wie gezeigt, in einer Nut in dem Flügelrahmenprofil 12 verankert und hat in der Kammer 14 die Form einer dreiecksförmig zulaufenden Gummilippe 21 aus einem handelsüblichen bzw. in der Fenstertechnik üblichen Gummimaterial. Die Gummilippe 21 ist vorzugsweise auf das Blendrahmenprofil 11 hin ausgerichtet, berührt diese jedoch nicht. Vorzugsweise erstreckt sich die Dichtlippe auf bis zu 60% - 85% der Höhe der zweiten Teilkammer 17 von dem Flügelrahmenprofil 12 ausgehend und insbesondere parallel zu der Ebene der Verglasung 13 in die zweite Teilkammer 17 hinein.

Das Blendrahmenprofil 11 und das Flügelrahmenprofil 12 gemäß Figur 1 sind jeweils vorzugsweise aus einem Furnierschichtholz 31 mit einer Vielzahl von Einzellagen 32, d. h. beispielsweise aus 1 mm bis 4 mm, vorzugsweise ca. 2 mm oder ca. 3 mm dicken einzelnen Schälfurnierlagen aus vorzugsweise einem Nadelholz wie Fichte ausgebildet, die in einem Durchlaufverfahren mit versetzten Stößen miteinander verleimt worden sind. Die Anzahl der Einzellagen 32 liegt, je nach Dimensionierung des Blendrahmenprofils 11 bzw. des Flügelrahmenprofil 12, in einem Bereich von typischerweise 10 bis 40, insbesondere 15 bis 25. Das Furnierschichtholz 31 ist vorzugsweise das von der Firma Metsä Wood Deutschland GmbH, Bremen, unter der Bezeichnung Kerto^{®}-S vertriebene Furnierschichtholz. Anstelle des Furnierschichtholzes 31 kann aber auch Massivholz verwendet werden. Die Figur 1 zeigt weiter, dass das Blendrahmenprofil 11 und das Flügelrahmenprofil 12 optional auf der Innenseite 25 des Fensters 10 oberflächlich bereichsweise, d. h. insbesondere im im Inneren des Gebäudes sichtbaren Bereich, mit einem Abschlussfurnier 33 aus beispielsweise Holz versehen sind. Mit Hilfe des Abschlussfurniers 33 kann der optische Eindruck des Fensters 10 auf der Innenseite 25 verändert bzw. nach Wahl des Kunden konfiguriert werden.

Die Bauform des Flügelrahmenprofils 12 sowie des Blendrahmenprofils 11 gemäß Figur 1 erlaubt es, die Gesamtbreite des Fensterrahmens (Flügelrahmenprofil und Blendrahmenprofil zusammen bei geschlossenem Fenster) auf lediglich 94 mm zu reduzieren, was das Fenster 10 ästhetisch besonders attraktiv macht.

Auf der Außenseite 24 des Fensters 10 ist als Dämmelement 26 eine ca. 27 mm dicke Dämmplatte aus einem Dämmmaterial 36, vorzugsweise XPS, d.h. expandiertem Polystyrol, vorgesehen, die beiderseits mit einer ca. 1,2 mm Deckschicht 27 aus Fiberglas verklebt ist, und die weiter mit einem ebenfalls aufgeklebten Abdeckprofil 28 in Form eines Aluminiumprofils verklebt ist. Statt eines Aluminiumprofils kann grundsätzlich aber auch ein Profil aus einem anderen Material wie Kunststoff, Holz oder Kupfer eingesetzt werden. Die auf der dem Blendrahmenprofil 11 zugewandten Seite des Dämmelementes 26 vorgesehene Deckschicht 27 ist vorzugsweise analog der anderen Deckschicht 27 ausgebildet, d.h. beispielsweise aus einem 1,2 mm dicken Fiberglasschicht 27, und sie ist ebenfalls mit dem Blendrahmenprofil 11 verklebt. Dazu weist das Blendrahmenprofil 11 eine Ausnehmung 38 zur Aufnahme des Klebers auf, die beispielsweise ca. 2 mm bis 3 mm tief ist. Am Rand des Blendrahmenprofils 11 ist zwischen dem Blendrahmenprofil 11 und dem Dämmelementes 26 eine Dichtung 37, insbesondere eine Silikondichtung vorgesehen.

Figur 1 zeigt weiter, dass das Blendrahmenprofil 11 und das Flügelrahmenprofil 12 bereichsweise Ausnehmungen aufweisen können, die mit einem Dämmmaterial wie expandiertem Polystyrol (XPS) ausgefüllt sein können. Weiter können das Blendrahmenprofil 11 und das Flügelrahmenprofil 12 bereichsweise auch weitere Nuten zur Aufnahme von Dichtungen oder Klebstoff aufweisen.

Im Bereich des Übergangs von dem Dämmelement 26 zu der Verglasung 13 ist eine relativ harte Dichtung 39, vorzugsweise eine Dichtung aus Gummi mit einer spitz zulaufenden Lippe, vorgesehen, die den Spalt zwischen dem Dämmelement 26 und der Verglasung 13 dort abdichtet, und die bei geschlossenem Fenster 10 zum Inkontaktkommen mit der Verglasung 13 ausgebildet ist. Diese Dichtung 39 hat vorzugsweise eine Härte in einem Bereich von 45 Shore A bis 55 Shore A, beispielsweise 50 Shore A. Der relativ harten Dichtung 39 gegenüber ist eine relativ weiche Dichtung 40, insbesondere erneut aus Gummi, vorgesehen. Diese Dichtung 40 hat vorzugsweise eine Härte in einem Bereich von 70 Shore A bis 90 Shore A, beispielsweise 80 Shore A. Die Dichtung 40 ist mit dem weiteren Profil 20 verbunden, das die Verglasung 13 hält.

Insgesamt ist in Figur 1 ist das Dämmelement 26 hinsichtlich des Fensters 10 somit nur mit dem Blendrahmenprofil 11 verbunden.

Figur 2 zeigt ein zweites Ausführungsbeispiel der Erfindung wobei zwei benachbarte Fenster 10 bzw. Verglasungen 13 jeweils ein zugeordnetes Flügelrahmenprofil 11 aufweisen. Daneben ist in Figur 2 zwischen den Verglasungen ein Stulpprofil 30 oder eine Stulpleiste vorgesehen, das mit dem das Dämmelement 26 verbunden, insbesondere verklebt ist.

Grundsätzlich ist der Aufbau in dem Ausführungsbeispiel gemäß Figur 2 dem Aufbau in dem Ausführungsbeispiel gemäß Figur 1 analog und auch die verwendeten Materialien sind gleich. Gleiche Bezugszeichen in den Figuren 1 und 2 (und auch in den nachfolgenden Figuren 3 bis 6) bezeichnen daher jeweils gleiche oder äquivalente Bauteile. Auch die Fenster 10 gemäß Figur 2 (wie auch im Fall der weiteren Figuren 3 bis 6) sind vorzugsweise Fenster für ein Niedrigenergie oder Passivhaus, die gemäß EN 10077 und bezogen auf eine Fensterprüfgröße von 1230 x 1480 mm einen Wärmedurchgang Fenster U_{Window} von ≤ 0,65 W/m²K, einen Wärmedurchgang Rahmen U_{Frame} seitlich und oben von ≤ 0,65 W/m²K, und einen Wärmedurchgang Rahmen U_{Frame} unten von ≤ 0,8 W/m²K haben.

In Figur 2 ist die Dämmplatte 26 in Form einer Stulpleiste ausgebildet. Das Abdeckprofil 26 gemäß Figur 2 hat gegenüber der Figur 1 nun eine etwas andere, beide Verglasungen 13 verbindende Form. Die Bauform der Flügelrahmenprofile 12 sowie des Stulpprofils 30 gemäß Figur 2 erlaubt es, die Gesamtbreite des Fensterrahmens zwischen den Verglasungen 13 erneut auf lediglich 94 mm zu reduzieren, was das Fenster 10 ästhetisch besonders attraktiv macht.

So ist in Figur 2 das auf der linken Seite befindliche Flügelrahmenprofil 12 ein Spielbild des Flügelrahmenprofils 12 auf der rechten Seite, bei dem nur auf der der Innenseite 25 zugewandten Seite im Bereich der zweiten Dichtung 19 eine Abfräsung vorgenommen wurde, bei dem eine weitere Abfräsung in etwa gegenüber der Kammertrennvorrichtung 15 zur Aufnahme eines abgeknickten, vorzugsweise L-förmig ausgebildeten Bereichs des Stulpprofils 30 vorgenommen wurde, und bei dem die Nuten für die Dichtung 19 jeweils etwas unterschiedlich geformt ausgeführt sind. Ein solches Design der beiden sich gegenüberliegenden Flügelrahmenprofile 12 und des Stulpprofils 30 führt zu Kostenvorteilen in der Fertigung durch eine geringe Fertigungskomplexität und weniger Lagerkosten für unterschiedliche vorgefertigte Profile. Außerdem erlaubt dies eine sehr schmale Bauform bei gleichzeitig hoher Stabilität in Druck- bzw. Zug-Richtung.

In Figur 2 ist das Dämmelement 26 hinsichtlich des Fensters 10 nur mit dem Stulpprofil 30 verbunden. Das Dämmmaterial 36 ist hier auf der Außenseite 24 und über seine Ecken von Abdeckprofilen 26 umgeben und beiderseits mit den Dichtungen 39 versehen, die jeweils mit der Verglasung 13 in Kontakt sind.

Die Figur 3 erläutert ein drittes Ausführungsbeispiel der Erfindung in Form eines Schnittes durch einen Teil eines Fensters 10, wobei sich das Ausführungsbeispiel von dem Ausführungsbeispiel gemäß Figur 1 nur dadurch unterscheidet, dass das Dämmelement 26 eine integrierte Wasserabführung 34 aufweist. Dazu verläuft in dem Dämmelement 26 eine Röhre oder eine Bohrung durch das Dämmmaterial 36 und durch die beiden Deckschichten 27, die eine von dem weiteren Profil 20, dem Blendrahmenprofil 11 und dem Dämmelement 26 bei geschlossenem Fenster 10 gebildete Kammer mit der Außenseite des Dämmelementes 26 verbindet, so dass Wasser oder Feuchtigkeit aus dieser Kammer abgeführt werden kann. Zu diesem Zweck ist auch das Abdeckprofil 26 in seiner Form, wie gezeigt, modifiziert.

Die Figur 4 erläutert ein viertes Ausführungsbeispiel der Erfindung in Form eines Schnittes durch einen Teil eines feststehenden Fensters 10 mit einem Dämmelement 26, das analog dem Dämmelement 26 gemäß Figur 1 ausgebildet ist. Das weitere Profil 20 ist hier jedoch direkt mit dem Blendrahmenprofil 11 verbunden. In Figur 4 ist weiter die weiche Dichtung 40 aus den Figuren 1 bis 3 nicht vorhanden; stattdessen weist die harte Dichtung 39 mehrere Dichtlippen auf und sie kann in diesem Fall auch weicher ausgestaltet sein. Durch Blendrahmenprofil 11 gemäß Figur 4 ist wiederum aus einem Furnierschichtholz 31 mit einer Vielzahl von Einzellagen 32, d. h. beispielsweise aus 1 mm bis 4 mm, vorzugsweise ca. 2 mm oder ca. 3 mm dicken einzelnen Schälfurnierlagen aus vorzugsweise einem Nadelholz wie Fichte ausgebildet, die in einem Durchlaufverfahren mit versetzten Stößen miteinander verleimt worden sind. Das Furnierschichtholz 31 ist vorzugsweise das von der Firma Metsä Wood Deutschland GmbH, Bremen, unter der Bezeichnung Kerto^{®}-S vertriebene Furnierschichtholz. Anstelle des Furnierschichtholzes 31 kann aber auch Massivholz verwendet werden. Die Figur 4 zeigt weiter, dass das Blendrahmenprofil 11 auf der Innenseite 25 des Fensters 10 oberflächlich bereichsweise, d. h. insbesondere im im Inneren des Gebäudes sichtbaren Bereich, mit einem Abschlussfurnier 33 aus beispielsweise Holz versehen ist. Daneben ist in Figur 4 im Bereich des Übergangs von dem Blendrahmenprofil 11 zu der Verglasung 13 ein Innenprofil 41 vorzugsweise aus Massivholz vorgesehen, das mit dem Blendrahmenprofil 11 und dem weiteren Profil 20 verbunden ist. Das Innenprofil kann mit dem Blendrahmenprofil 11 und dem weiteren Profil 20 verklebt oder über eine entsprechende Strukturierung auch anderweitig mit diesen Profilen 11, 20 verbunden sein.

Figur 5 erläutert ein fünftes Ausführungsbeispiel der Erfindung in Form eines Schnittes durch einen Teil eines Fensters 10 mit einem Blendrahmenprofil 11 und einem Flügelrahmenprofil 12. Der Aufbau gemäß Figur 5 unterscheidet sich von Figur 1 nur dadurch, dass zusätzlich eine Verschattungsvorrichtung 42 zwischen dem Fenster 10 und der Außenseite 24 des Gebäudes vorgesehen ist. Die Verschattungsvorrichtung ist dabei vorzugsweise als System vorgefertigt mit dem Fenster 10 verbunden. Dazu weist die Verschattungsvorrichtung 42 eine erste Platte 43 auf, die mit dem Dämmelement 26 verbunden, insbesondere verschraubt ist, und sich vorzugsweise an ein Ende des Abschlussprofils 28 anschließt. Weiter weist die Verschattungsvorrichtung 42 eine zweite Platte 44 auf, die mit dem Blendrahmenprofil 11 verbunden ist und parallel zu der ersten Platte 43 verläuft. Zwischen den beiden Platten 43, 44 befindet sich eine thermische Isoliervorrichtung 45 vorzugsweise in Form von Vakuumdämmpaneelen oder alternativ, aber weniger bevorzugt, auch XPS-Platten.

In Figur 5 ist die thermische Isoliervorrichtung 45 vorzugsweise in Form von im gezeigten Schnitt zwei nebeneinander liegenden Vakuumdämmpaneelen ausgebildet, die jeweils vorzugsweise 25 mm breit sind. Diese Vakuumdämmpaneele haben in Richtung senkrecht zu dem gezeigten Schnitt eine vorzugsweise standardisierte Länge von beispielsweise 0,8 m, 1,0 m oder 1,2 m, wobei in dem Fall, dass das Fenster 10 oder die Verschattungsvorrichtung 42 eine Höhe in Richtung der Länge der Vakuumdämmpaneele hat, die nicht zu der standardisierten Länge der Vakuumdämmpaneele passt, verbleibende Hohlräume beispielsweise mit expandiertem Polystyrol bzw. XPS-Platten ausgefüllt werden. Dies ist auch letztlich der Grund, warum in Figur 5 zwei parallele Vakuumdämmpaneele im Schnitt gezeigt sind. Diese Paneele sind in der Richtung senkrecht zu der Ebene des Schnittes vorzugsweise derart gegeneinander versetzt eingebaut, wobei verbleibende Hohlräume mit expandiertem Polystyrol gefüllt werden, dass in jedem Schnitt parallel zu dem in Figur 5 gezeigten Schnitt mindestens eine Vakuumdämmpaneele vorhanden ist. Die Verwendung von Vakuumdämmpaneelen einheitlicher bzw. standardisierter Länge statt individuell gefertigter Paneele mit angepasster Länge hat Kostenvorteile und logistische Vorteile (Verwendung von weniger verschiedenen Komponenten, weniger Inventar, vereinfachter Herstellungsprozess).

Die beiden Platten 43, 44 sind vorzugsweise Siebdruckplatten, d. h. mit einem Phenolharzfilm beschichtete Sperrholzplatten, Multiplex-Platten, d. h. Furnier-Sperrholzplatten mit einer Mehrzahl von Furnierlagen, oder Multiplex-Siebdruckplatten. Sie können aber auch andere Holzwerkstoffplatten oder zementgebundene Spanplatten sein. Im oberen Bereich sind die beiden Platten 43, 44 mit einer Tragplatte 46 verbunden, an der auch beispielsweise eine Jalousie 47 oder ein Rollladen befestigt ist. Vorzugsweise ist die Tragplatte 46 mit der zweiten Platte 44 verschraubt. Die erste Platte 43 kann zur Verbindung mit der Tragplatte 46 nur in eine Nut in der Tragplatte 46 eingesetzt sein, sie kann damit aber auch verklebt oder verschraubt sein. Wenn die erste Platte 43 nur in die Tragplatte eingesetzt ist oder leicht zugänglich mit dieser verschraubt ist, ist die thermische Isoliervorrichtung 45 auch nach Einbau der Verschattungsvorrichtung 42 in ein Gebäude stets leicht zugänglich und damit nach Bedarf austauschbar. Dies gilt besonders für Vakuumdämmpaneele. Auf der Außenseite 24 weist die Verschattungsvorrichtung 42 eine dritte Platte 48 auf, die vorzugsweise analog der ersten oder zweiten Platte 43, 44 ausgebildet ist. Diese dritte Platte 48 ist vorzugsweise mit der Tragplatte 46 verschraubt. Sie kann mit einem Außenabschlussprofil 49, beispielsweise aus Aluminium abschließen. Auf die dritte Platte 48 folgt dann bei einem Niedrigenergie- oder Passivhaus in der Regel eine weitere Dämmung mit einer Dicke von typischerweise 30 mm, auf der sich dann der Putz befindet.

Bei der Vorgehensweise gemäß Figur 5 lässt sich die Verschattungsvorrichtung 42 schon bei der Herstellung des Fensters 10 mit diesem in Form eines Systems aus Fenster 10 und Verschattungsvorrichtung 42 integrieren und derart komplett vorgefertigt an die Baustelle anliefern, so dass die Installation vor Ort sehr schnell und unkompliziert erfolgen kann, und dort auch nicht das Risiko von Fehlern oder Unzulänglichkeiten bei der Bauausführung besteht.

Der auf der Innenseite 25 des Gebäudes zwischen der zweiten Platte 44 und dem Gebäude verbleibende Hohlraum kann bei Bedarf mit einem Dämmmaterial wie Platten aus expandiertem Polystyrol gefüllt werden.

Die Konstruktion gemäß Figur 5 hat im Übrigen den Vorteil, dass die Einbautiefe des Fensters 10 variabel ist, d.h. die Einbautiefe kann je nach Gebäudegegebenheiten über die verbleibende Dicke des zwischen der zweiten Platte 44 und dem Gebäude verbleibenden Hohlraums in einfacher Weise eingestellt werden.

Die Figur 6 zeigt schließlich einen Schnitt durch das System aus Fenster 10 und Verschattungsvorrichtung 42 senkrecht zu der Ebene des in Figur 5 gezeigten Schnittes, d. h. während Figur 5 einen Längsschnitt durch die Verschattungsvorrichtung 42 zeigt, sieht man diese in Figur 6 im Querschnitt.

In Figur 6 ist erkennbar, dass die Verschattungsvorrichtung 42 seitlich ein Zargenprofil 50 aufweist, in dem die Jalousie 47 bzw. der Rollladen läuft. Dieses Zargenprofil 50 ist vorzugsweise ein Aluminiumprofil und gibt dadurch der Verschattungsvorrichtung 42 eine gute Stabilität. Das Zargenprofil 50 ist mit dem Dämmelement 26 vorzugsweise über einen Clip verbunden und/oder damit verschraubt. Diese Verbindung erfolgt vorzugsweise im Bereich des Abdeckprofils 26, das ja ebenfalls vorzugsweise aus Aluminium ausgebildet ist.

Das Zargenprofil 50 ist bevorzugt so ausgebildet, dass es in dem Fall, dass keine Verschattung gebraucht wird oder vorhanden ist, d. h. keine Jalousie 47 oder kein Rollladen vorgesehen ist, es lediglich in der Ebene von Figur 6 um 180º gedreht montiert werden muss. Insofern ist das Zargenprofil 50 universell für alle Gegebenheiten verwendbar und man muss nicht verschiedene Profile vorhalten.

## Patentansprüche

1. Fenster, insbesondere für ein Niedrigenergiehaus oder ein Passivhaus, mit einem Fensterprofilelement (11, 12, 30) und einer Verglasung (13), wobei das Fensterprofilelement (11, 12, 30) zumindest bereichsweise mit einem Dämmelement (26) verbunden ist, wobei das Dämmelement (26) ein plattenförmiges Dämmmaterial (36) aufweist und wobei das Dämmelement (26) bereichsweise weiter mit einem Abdeckprofil (28) versehen ist, und wobei das Dämmelement (26) beiderseits des plattenförmigen Dämmmaterials (36) zumindest bereichsweise jeweils eine Deckschicht (27) aufweist **dadurch gekennzeichnet, dass** beide Deckschichten (27) Fiberglasdeckschichten mit einer Dicke in einem Bereich von 0,5 mm bis 2,5 mm sind.

2. Fenster nach Anspruch 1 wobei das plattenförmige Dämmmaterial (36) expandiertes Polystyrol ist.

3. Fenster nach Anspruch 1 oder 2 wobei das plattenförmige Dämmmaterial (36) eine Dicke in einem Bereich von 15 mm bis 40 mm aufweist.

4. Fenster nach Anspruch 1 oder 2 wobei das plattenförmige Dämmmaterial (36) eine Dicke in einem Bereich von 22 mm bis 32 mm aufweist.

5. Fenster nach mindestens einem der vorangehenden Ansprüche wobei das Fensterprofilelement ein Blendrahmenprofil (11) ist.

6. Fenster nach mindestens einem der vorangehenden Ansprüche wobei das Fensterprofilelement ein Stulpprofil (30) ist.

7. Fenster nach mindestens einem der vorangehenden Ansprüche wobei das Dämmelement (26) auf der Außenseite (24) des Fensters (10) mit dem Fensterprofilelement verbunden, insbesondere verklebt ist.

8. Fenster nach mindestens einem der vorangehenden Ansprüche wobei zumindest eine der beiden Deckschichten (27), insbesondere beide Deckschichten (27), mit dem plattenförmigen Dämmmaterial (36) verklebt ist.

9. Fenster nach mindestens einem der vorangehenden Ansprüche wobei das Abdeckprofil (28) ein Aluminiumabdeckprofil ist.

10. Fenster nach mindestens einem der vorangehenden Ansprüche wobei das Abdeckprofil (28) mit dem Dämmelement (26) verklebt ist.

11. Fenster nach mindestens einem der vorangehenden Ansprüche wobei sich das Abdeckprofil (28) um mindestens eine Ecke des Dämmelementes (26) erstreckt.

12. Fenster nach mindestens einem der vorangehenden Ansprüche wobei das Dämmelement (26) bereichsweise eine Oberfläche des Fensterprofilelementes (11, 12, 30) sowie einen Randbereich der Verglasung (13) überdeckt.

13. Tür, insbesondere für ein Niedrigenergiehaus oder ein Passivhaus, mit einem Türprofilelement und einer Verglasung oder einem Türblatt, wobei das Türprofilelement zumindest bereichsweise mit einem Dämmelement (26) verbunden ist, wobei das Dämmelement (26) ein plattenförmiges Dämmmaterial (36) aufweist und wobei das Dämmelement (26) bereichsweise weiter mit einem Abdeckprofil (28) versehen ist, und wobei das Dämmelement (26) beiderseits des plattenförmigen Dämmmaterials (36) zumindest bereichsweise jeweils eine Deckschicht (27) aufweist **dadurch gekennzeichnet, dass** beide Deckschichten (27) Fiberglasdeckschichten mit einer Dicke in einem Bereich von 0,5 mm bis 2,5 mm sind.

## Claims

1. Window, in particular for a low energy house or a passive house, with a window profile element (11, 12, 30) and a glazing (13), where the window profile element (11, 12, 30) is connected at least area-wise with an insulating element (26), where the insulating element (26) has panel-like insulating material (36) and where the insulating element (26) is furthermore provided area-wise with a cover profile (28), and where the insulating element (26), on both sides of the panel-like insulating material (36), has, at least area-wise, in each case a top layer (27), **characterized in that** both top layers (27) are fibre glass top layers with a thickness in a range of from 0.5 mm to 2.5 mm.

2. Window according to claim 1 where the panel-like insulating material (36) is expanded polystyrene.

3. Window according to claim 1 or 2 where the panel-like insulating material (36) has a thickness in a range of from 15 mm to 40 mm.

4. Window according to claim 1 or 2 where the panel-like insulating material (36) has a thickness in a range of from 22 mm to 32 mm.

5. Window according to at least one of the preceding claims where the window profile element is a frame profile (11).

6. Window according to at least one of the preceding claims where the window profile element is a secondary sash profile (30).

7. Window according to at least one of the preceding claims where the insulating element (26) is joined, in particular adhesively bonded, with the window profile element on the outside (24) of the window (10).

8. Window according to at least one of the preceding claims where at least one of the two top layers (27), in particular both top layers (27), is adhesively bonded with the panel-like insulating material (36).

9. Window according to at least one of the preceding claims where the cover profile (28) is an aluminium cover profile.

10. Window according to at least one of the preceding claims where the cover profile (28) is adhesively bonded with the insulating element (26).

11. Window according to at least one of the preceding claims where the cover profile (28) extends around at least one corner of the insulating element (26).

12. Window according to at least one of the preceding claims where the insulating element (26) area-wise covers a surface of the window profile element (11, 12, 30) as well as an edge area of the glazing (13).

13. Door, in particular for a low energy house or a passive house, with a door profile element and a glazing or a door panel where the door profile element is connected at least area-wise with an insulating element (26), where the insulating element (26) has panel-like insulating material (36) and where the insulating element (26) is furthermore provided area-wise with a cover profile (28), and where the insulating element (26), on both sides of the panel-like insulating material (36), has, at least area-wise, in each case a top layer (27), **characterized in that** both top layers (27) are fibre glass top layers with a thickness in a range of 0.5 mm to 2.5 mm.

## Revendications

1. Fenêtre, en particulier pour une maison basse consommation ou une maison passive, avec un profilé de fenêtre (11, 12, 30) et un vitrage (13), le profilé de fenêtre (11, 12, 30) étant au moins partiellement assorti d'un isolant (26), l'isolant (26) étant composé d'un matériau isolant en forme de plaque (36) et l'isolant (26) étant de plus partiellement pourvu d'un profilé de couverture (28) et l'isolant (26) comportant au moins partiellement une couche de surface (27) sur chacune des deux faces du matériau isolant en forme de plaque (36), **caractérisées en ce que** les deux couches de surface (27) sont en fibre de verre d'une épaisseur entre 0,5 mm et 2,5 mm.

2. Fenêtre selon la revendication 1 où le matériau isolant en forme de plaque (36) est du polystyrène expansé.

3. Fenêtre selon la revendication 1 ou 2 où le matériau isolant en forme de plaque (36) a une épaisseur entre 15 mm et 40 mm.

4. Fenêtre selon la revendication 1 ou 2 où le matériau isolant en forme de plaque (36) a une épaisseur entre 22 et 32 mm.

5. Fenêtre selon au moins une des revendications précédentes où le profilé de fenêtre est un cadre dormant (11).

6. Fenêtre selon au moins une des revendications précédentes où le profilé de fenêtre est un vantail.

7. Fenêtre selon au moins une des revendications précédentes où l'isolant (26) est lié sur la face externe (24) de la fenêtre (10) au profilé de la fenêtre, en particulier collé.

8. Fenêtre selon au moins une des revendications précédentes où le matériau isolant en forme de plaque est collé sur au moins une des deux couches de surface (27), en particulier sur les deux couches de surface (27).

9. Fenêtre selon au moins une des revendications précédentes où le profilé de couverture (28) est en aluminium.

10. Fenêtre selon au moins une des revendications précédentes où l'isolant (26) est collé sur le profilé de couverture (28).

11. Fenêtre selon au moins une des revendications précédentes où le profilé de couverture (28) s'étend au moins autour d'un angle de l'isolant (26).

12. Fenêtre selon au moins une des revendications précédentes où l'isolant (26) recouvre partiellement une surface du profilé de fenêtre (11, 12, 30) ainsi qu'une zone de bordure du vitrage (13).

13. Porte, en particulier pour un bâtiment basse consommation ou une maison passive, avec un profilé de porte et un vitrage ou un panneau de porte, le profilé de porte étant au moins partiellement assorti d'un isolant (26), l'isolant (26) étant composé d'un matériau isolant en forme de plaque (36) et l'isolant (26) étant de plus partiellement pourvu d'un profilé de couverture (28) et l'isolant (26) comportant au moins partiellement une couche de surface (27) sur chacune des deux faces du matériau isolant en forme de plaque (36), **caractérisées en ce que** les deux couches de surface (27) sont en fibre de verre d'une épaisseur entre 0,5mm et 2,5 mm.
